Europäisches Patentamt

European Patent Office

Office européen des brevets

(19)

(11) Numéro de publication : **0 394 115 B1**

(12) **FASCICULE DE BREVET EUROPEEN**

(45) Date de publication du fascicule du brevet :
**13.07.94 Bulletin 94/28**

(51) Int. Cl.⁵ : **G06F 12/12, G06F 12/08**

(21) Numéro de dépôt : **90401028.7**

(22) Date de dépôt : **13.04.90**

(54) **Dispositif d'accélération des accès mémoire dans un système informatique.**

(30) Priorité : **13.04.89 FR 8904883**

(43) Date de publication de la demande :
**24.10.90 Bulletin 90/43**

(45) Mention de la délivrance du brevet :
**13.07.94 Bulletin 94/28**

(84) Etats contractants désignés :
**DE ES FR GB IT NL**

(56) Documents cités :
**ELECTRONICS INTERNATIONAL, vol. 55, no. 1, 13 janvier 1982, pages 155-159; W.P. WARD: "Minicomputer blasts through 4 million instructions a second"**
**1987 INTERNATIONAL SOLID-STATE CONFERENCE, New York, 25 février 1987, pages 36-37, IEEE, New York, US; H. KADOTA et al.: "A CMOS 32b microprocessor with on-chip cache and transmission lookahead buffer"**

(73) Titulaire : **BULL S.A.**
**Tour BULL,**
**1, place Carpeaux**
**F-92800 Puteaux (FR)**

(72) Inventeur : **Ducousso, Laurent**
**121, Avenue de Malakoff**
**F-75116 Paris (FR)**
Inventeur : **Vallet, Philippe**
**121, Avenue de Malakoff**
**F-75116 Paris (FR)**

(74) Mandataire : **Colombe, Michel et al**
**Bull S.A.**
**Tour BULL Cédex 74**
**PC/TB2803**
**F-92039 Paris La Défense (FR)**

## Description

L'invention se situe dans le domaine des systèmes informatiques et concerne les problèmes relatifs à l'accélération des accès aux informations contenues dans la mémoire principale de ces systèmes.

Le sous-système central d'un système informatique comprend généralement trois types d'unités : des processeurs, des modules mémoires formant la mémoire principale et des contrôleurs d'entrée-sortie. Habituellement, les processeurs communiquent avec les modules mémoire par l'intermédiaire d'un bus permettant l'adressage et le transfert des données entre les processeurs et la mémoire principale. Pour qu'une instruction d'un programme s'exécute, ses opérandes doivent être recherchées en mémoire principale. Il en est de même des instructions successives du programme à exécuter. Pour un système fonctionnant en multiprogrammation, la mémoire doit être partagée de façon à permettre un multiplexage entre les programmes. Pour cela on utilise généralement l'adressage virtuel associé à un mécanisme de pagination qui consiste à découper l'espace adressable, ou "espace virtuel", en zones de taille fixe appelées "pages". Dans un tel système, un programme en cours d'exécution peut adresser un espace virtuel auquel doit correspondre une partie de la mémoire principale. Ainsi, une adresse logique ou virtuelle doit être traduite en une adresse physique ou réelle permettant l'adressage de la mémoire.

Une instruction nécessitant un adressage contient des indications permettant au processeur qui l'exécute d'effectuer un développement d'adresse ayant pour résultat une adresse virtuelle, encore appelée adresse effective. Généralement, cette adresse virtuelle est segmentée, c'est-à-dire qu'elle est constituée d'un numéro de segment, d'un numéro de page et d'un déplacement dans la page. Le numéro de segment peut être lui-même subdivisé en un numéro de table de segment et un déplacement dans cette table.

Pour accéder dans la mémoire aux informations associées à cette adresse segmentée, plusieurs accès mémoire sont alors nécessaires : il faut d'abord accéder à une table d'espace d'adresse affectée au processus (programme en cours d'exécution), dans cette table, à l'aide du numéro de table de segment on obtient l'adresse réelle de la table de segment correspondante, en fonction du déplacement dans la table de segment on accède à un descripteur de segment permettant de calculer l'adresse réelle d'une table de page et en fonction du numéro de page définissant le déplacement dans cette table de page on obtient finalement une adresse réelle de page permettant d'adresser la mémoire. L'adresse réelle d'un mot ou d'un octet particulier est obtenue par concaténation de l'adresse réelle de page et du déplacement dans cette page défini par les poids faibles de l'adresse virtuelle.

Or, l'exécution d'un accès mémoire est relativement longue notamment, à cause de l'utilisation d'un bus commun aux processeurs et aux modules mémoire. Aussi pour améliorer les performances du système, on cherche à éviter autant que possible les accès mémoire successifs qui sont en principe nécessaires à chaque adressage. Or la plupart des processus présentent une propriété de localité selon laquelle, pendant une phase donnée de son exécution, le nombre de pages utilisées par un processus est très faible par rapport au nombre total de pages qui lui sont allouées.

Cette propriété peut être mise à profit pour accélérer la traduction de l'adresse virtuelle en adresse réelle. Pour cela, on mémorise dans une mémoire rapide ou dans des registres un certain nombre de couples d'adresse virtuelle et d'adresse réelle associée, appelés "extraits", utilisés par le programme au cours d'une phase d'exécution. Par la suite, pour effectuer la traduction d'une adresse virtuelle en adresse réelle, on accède à cette mémoire rapide de façon associative pour rechercher si l'adresse virtuelle à traduire est déjà présente dans la mémoire rapide. Si c'est le cas, on obtient directement l'adresse réelle sans accéder à la mémoire principale.

La propriété de localité est également à la base de l'usage des antémémoires (souvent appelées mémoires "cache") constituées de mémoires rapides et de petite taille dans lesquelles sont conservées en permanence les pages le plus récemment référencées. La probabilité pour qu'une nouvelle référence concerne une information déjà présente dans l'antémémoire étant élevée, le temps d'accès apparent à l'information est ainsi réduit. De façon analogue à la traduction d'adresse virtuelle en adresse réelle, une antémémoire comporte une table contenant les adresses réelles des pages présentes dans l'antémémoire. Cette table appelée répertoire ("directory" en anglais) peut être consultée de façon associative de façon à déterminer si l'information associée à une adresse réelle donnée est contenue dans l'antémémoire. Si c'est le cas, un mot ou un octet est obtenu en adressant l'antémémoire au moyen des poids faibles de l'adresse virtuelle du mot ou de l'octet.

Dans la suite de l'exposé, nous ne développerons que les problèmes relatifs aux traductions d'adresses, étant entendu que les mêmes considérations pourront s'appliquer aux problèmes des antémémoires. En effet, dans les deux cas, le problème consiste à obtenir rapidement une information associée à une adresse de page. Dans le cas de la traduction d'adresse, l'adresse de page est une adresse virtuelle et l'information associée est l'adresse réelle correspondante, tandis que dans le cas de l'antémémoire, l'adresse de page est une adresse réelle et l'information associée est constituée de l'ensemble des données contenues dans la page.

Comme nous l'avons vu, la mémoire rapide de traduction d'adresses est une mémoire associative comportant un certain nombre de registres ou plus généralement d'emplacements, permettant chacun de mémoriser un extrait constitué par une adresse virtuelle et son adresse réelle associée. Chaque extrait peut être accompagné d'informations complémentaires telles que des indicateurs de droit d'accès ou un indicateurs signalant qu'un accès en écriture a été effectué dans la page associée à cet extrait. Par ailleurs, chaque extrait est associé à un indicateur de présence qui, pour une valeur logique déterminée, signale que l'extrait associé est valide. Ces indicateurs de présence sont par exemple mis à 0 à l'initialisation, c'est-à-dire à chaque fois qu'un processus est activé dans le processeur concerné. Ensuite, au fur et à mesure que le processus utilise des pages nouvelles, les extraits associés sont chargés dans la mémoire associative et simultanément l'indicateur de présence est mis à 1. Lorsqu'un accès mémoire doit être effectué, l'adresse virtuelle est comparée à chaque adresse virtuelle contenue dans la mémoire associative et s'il y a coïncidence entre l'adresse virtuelle recherchée et l'une des adresses virtuelles contenues dans la mémoire alors que son indicateur de présence est à 1, l'adresse réel le correspondante peut être obtenue directement par simple lecture du registre d'adresse réelle.

Pour que ce mécanisme de traduction soit pratiquement réalisable, il est clair que la mémoire associative doit être de taille limitée. Il en résulte que pour certains processus, cette taille est insuffisante pour contenir les extraits de toutes les pages utilisées par le processus. Il faut donc prévoir le cas où la mémoire associative étant pleine, un des extraits présents doit être éliminé pour y charger à la place un nouvel extrait. Pour cela, on met en oeuvre un algorithme de remplacement destiné à sélectionner l'extrait à éliminer. De nombreux algorithmes ont déjà été proposés, comme par exemple :

- l'algorithme FIFO ("first in first out"), où l'extrait le plus ancien est éliminé,
- l'algorithme RAND ("random choice"), où l'extrait est choisi au hasard,
- l'algorithme LFU ("least frequently used"), où l'on supprime l'extrait le moins fréquemment utilisé,
- l'algorithme LRU ("least recently used"), où l'on remplace l'extrait le moins récemment utilisé.

L'algorithme LRU donne théoriquement de bons résultats mais en pratique on préfère utiliser une version simplifiée, appelée pseudo LRU. En effet, pour gérer n extaits, un vrai LRU nécessite $\log_2(n)$ bits par extrait pour conserver l'indication de l'ordre des dernières utilisations des extraits. Par contre, un pseudo LRU ne nécessite qu'un seul bit, appelé bit ou indicateur de référence, par extrait.

Selon l'algorithme pseudo LRU, le bit de référence est mis à 1 lorsque l'extrait présent qui lui est associé est utilisé. Lorqu'un nouvel extrait doit être chargé alors que la mémoire associative est pleine, c'est-à-dire lorsque tous les indicateurs de présence sont à 1, l'extrait à éliminer est le premier dans l'ordre chronologique de remplissage dont le bit de référence est à 0. Lorsqu'on atteint une saturation, c'est-à-dire lorsque les bits de référence sont tous à 1 sauf un, on effectue une remise à 0 de tous les bits de référence et l'extrait dont le bit de référence est à 0 est remplacé par le nouvel extrait. A partir de cet instant, il y a perte de l'historique de l'utilisation des pages.

Un algorithme du type LRU à un seul bit de référence est décrit dans Electronics, volume 55, no 1, 13 janvier 1982, pages 155-159. W.P. WARD : "Mini computer blasts through 4 million instructions a second".

Compte tenu du phénomène de localité et du grand nombre d'accès mémoire qui se produisent pendant l'exécution d'un programme, la performance d'un système informatique dépend en grand partie de la rapidité du fonctionnement de la mémoire associative. Pour cela, il convient donc d'optimiser les circuits de lecture associative mais aussi les circuits de gestion des indicateurs de présence et de référence de sorte que leur mise à jour ne ralentisse pas le fonctionnement.

Aussi, l'invention a pour but de résoudre ce problème en proposant une réalisation du dispositif d'accélération qui permet un fonctionnement en deux phases d'horloge, c'est-à-dire qui permet l'exécution d'une lecture associative et la mise à jour correspondante des indicateurs pendant un temps de cycle correspondant à deux impulsions d'horloge, quel que soit l'état logique des indicateurs.

Pour cela et selon l'invention, le dispositif est conçu de manière à fonctionner de la façon suivante :

- pendant une première phase d'horloge, il effectue la comparaison entre l'adresse à traduire et chaque adresse contenue dans la mémoire rapide, il effectue l'évaluation de la condition de saturation et il verrouille le résultat de cette évaluation ;
- pendant la deuxième phase d'horloge, il met à jour les indicateurs de référence en fonction des signaux de coïncidence verrouillés pendant la première phase et du signal d'évaluation verrouillé.

Plus précisément l'invention a pour objet un dispositif pour accélérer l'accès aux informations contenues dans la mémoire principale d'un système informatique, ledit système étant capable d'accéder auxdites informations par adressage de ladite mémoire principale, l'ensemble formé par une adresse et l'information associée étant appelé "extrait", ledit dispositif comportant une mémoire rapide composée d'une pluralité d'emplacements, chaque emplacement étant capable de mémoriser un desdits extraits, chaque emplacement étant associé à une bascule de présence et à une bascule de référence initialement mises à zéro, ladite bascule de présence étant forcée à la valeur 1 logique lorsqu'un extrait est chargé dans l'emplacement associé, ladite mémoire rapide étant associée à des moyens de comparaison délivrant pour chaque emplacement un signal de coïncidence prenant la valeur 1 logique lorsque l'adresse d'une information recherchée coïncide avec l'adresse de l'extrait présent dans ledit emplacement, ledit dispositif étant caractérisé en ce qu'il reçoit des signaux de synchronisation à deux phases, en ce que lesdits signaux de coïncidence sont évalués pendant la première desdites phases et respectivement appliqués à l'entrée d'un moyen de mémorisation commandé par la première desdites phases de façon à former un signal de coïncidence verrouillé sur cette phase, en ce que ledit dispositif comprend un circuit de commande commun pour engendrer pendant la première desdites phases un signal d'évaluation fonction de l'état desdites bascules de référence et desdits signaux de coïncidence, ledit signal d'évaluation étant représentatif de l'état de saturation indiquant lorsque les bascules de référence sont toutes à 1 sauf une pour laquelle il y a coïncidence, en ce que ledit circuit de commande commun comprend des moyens de mémorisation dudit signal d'évaluation commandé par la première desdites phases de façon à former un signal d'évaluation verrouillé sur cette phase, en ce que ledit dispositif comprend des circuits de gestion de chacune desdites bascules de référence actifs pendant la seconde desdites phases pour commander lesdites bascules de référence en fonction dudit signal d'évaluation verrouillé et respectivement desdits signaux de coïncidence verrouillés.

Un problème particulier de réalisation concerne les moyens à utiliser pour détecter la condition de saturation des bascules de référence et pour effectuer leur remise à 0 en un seul cycle de deux phases d'horloge.

Aussi selon un aspect particulier de l'invention, cette condition est détectée par un circuit d'évaluation réalisant une fonction logique complexe définie comme étant l'opération logique NON-OU appliquée à des variables logiques produit associées auxdits extraits, chaque variable logique produit étant définie comme le produit logique du complément du bit de référence et du complément du signal de coïncidence associés respectivement à chaque extrait.

Selon un mode de réalisation particulier de l'invention (avec la convention de la logique positive) ce circuit d'évaluation est réalisé en technologie CMOS et il est caractérisé en ce qu'il comprend une ligne d'évaluation préchargée pendant la seconde desdites phases, en ce que chaque emplacement de ladite mémoire rapide est associé à deux transistors NMOS montés en série, en ce que ladite ligne d'évaluation est reliée à la masse par l'intermédiaire de chacun desdits transistors montés en série et en ce que, pour chaque emplacement, le premier et le deuxième transistors reçoivent sur leur grille respectivement le complément de l'indicateur de référence et du signal de coïncidence.

D'autres caractéristiques et détails de réalisation pour la mise en oeuvre de l'invention sont exposés dans la suite de la description en relation avec les figures où :

- la figure 1 représente de façon schématique les moyens de traitement d'un système informatique pour la mise en oeuvre de l'invention ;
- la figure 2 représente un mode de réalisation de la mémoire rapide ;
- la figure 3 représente un circuit de commande des indicateurs de référence .
- la figure 4 représente un détail de réalisation du circuit de commande de la figure 3 ;
- la figure 5 représente un circuit de gestion d'une des bascules de référence ;
- la figure 6 représente un chronogramme permettant d'expliquer le fonctionnement des circuits représentés aux figures 3 à 5 ;
- la figure 7 représente un circuit de sélection permettant de déterminer l'emplacement de la mémoire rapide où doit être chargé un nouvel extrait ;
- les figures 8 et 9 représentent des détails de réalisation du circuit de la figure 7 ;
- la figure 10 représente un circuit de commande de chargement d'un des emplacements de la mémoire rapide.

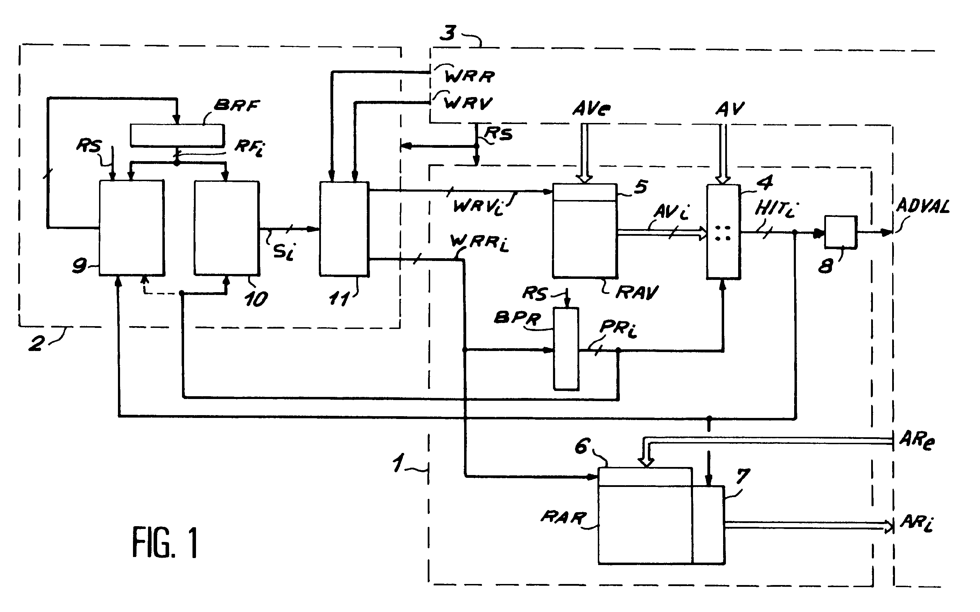

La figure 1 est une représentation générale des moyens de traitement d'un système informatique permettant de mettre en oeuvre l'invention. Ces moyens comprennent la mémoire rapide ou associative 1 reliée à son contrôleur 2 et aux autres circuits 3 d'un processeur. De façon classique, le processeur est relié à la mémoire principale (non représentée) par les circuits 3. Les circuits 3 comportent tous les moyens de traitement du processeur autres que ceux concernant la traduction d'adresse. En particulier, ils comportent une unité de développement d'adresse, généralement microprogrammée, pour calculer à partir des instructions les adresses virtuelles AV des informations recherchées. Le micrologiciel des circuits 3 effectue les recherches dans les tables pour obtenir des adresses réelles en fonction des adresses virtuelles. Cette traduction d'adresse est accélérée grâce à la mémoire associative 1 constituée d'un certain nombre n de registres d'adresse virtuelle RAV et du même nombre de registres d'adresse réelle RAR. La mémoire 1 comprend également un ensemble de n bascules BPR associées respectivement aux registres d'adresse virtuelle et d'adresse réelle. L'adresse virtuelle $AV_i$ contenue dans le registre d'adresse virtuelle de rang i et l'adresse réelle $AR_i$ contenue dans le registre d'adresse réelle de même rang constituent l'extrait i. Cet extrait i est associé à un indicateur de présence $PR_i$ dont la valeur logique correspond à l'état de la bascule de présence correspondante. Un comparateur 4 est relié aux sorties $AV_i$ des registres d'adresse virtuelle RAV et reçoit du micrologiciel l'adresse virtuelle AV à traduire. Le circuit de comparaison 4 est validé par les signaux de sorties $PR_i$ des bascules de présence BPR. Le circuit 4 délivre des signaux de coïncidence $HIT_i$ dont les valeurs logiques sont représentatives de l'égalité entre l'adresse logique recherchée et l'une des adresses logiques contenues dans les registres RAV. Les signaux $HIT_i$ sont appliqués à un circuit de validation 8 fournissant au micrologiciel un signal de validation d'adresse AD VAL indiquant si la traduction d'adresse est réussie.

En cas d'échec, le signal AD VAL déclenche un microprogramme de recherche dans les tables pour obtenir l'adresse réelle. Une fois la recherche effectuée, l'adresse virtuelle $AV_e$ et l'adresse réelle $AR_e$ associée sont appliquées respectivement aux interfaces d'entrée 5, 6 des registres d'adresse virtuelle et réelle pour être inscrits dans l'un de ces registres respectivement sous le contrôle des signaux de commande d'écriture $WRV_i$ et $WRR_i$.

Si la traduction est réussie, les signaux de coïncidence $HIT_i$ autorisent par l'interface 7 la lecture du registre d'adresse réelle contenant la traduction recherchée.

Le contrôleur 2 comprend un ensemble de bascules de référence BRF associées respectivement aux emplacements de la mémoire 1, donc aux extraits qu'elle contient. L'état $RF_i$ des bascules BRF est déterminé par un circuit de commande 9 qui reçoit les signaux de coïncidence $HIT_i$ et qui est relié aux sorties $RF_i$ des bascules de référence BRF. Un circuit de sélection 10 relié aux sorties des bascules de présence BPR et de référence BRF délivre des signaux de sélection $S_i$ qui sont appliqués à un circuit de commande de chargement 11 délivrant les signaux $WRV_i$ et $WRR_i$ déjà mentionnés. Les signaux de sélection $S_i$ permettent de déterminer les registres d'adresses virtuelles et réelles où un nouvel extrait non présent dans la table doit être chargé. Les commandes d'écriture $WRV_i$ et $WRR_i$ sont déterminées par le circuit de commande de chargement 11 en fonction des signaux de sélection $S_i$ et des signaux communs de commande d'écriture WRR, WRV délivrés par le micrologiciel. Le micrologiciel 3 fournit également un signal RS commandant la remise à zéro des bascules de présence et de référence.

Le dispositif de la figure 1 fonctionne de la façon suivante. Lorsqu'une adresse virtuelle AV est à traduire, le micrologiciel place cette adresse à l'entrée du comparateur 4. En cas de coïncidence, les signaux $HIT_i$ valident le registre d'adresse réelle contenant la traduction recherchée et le circuit 8 valide cette adresse par le signal AD VAL. En fonction des signaux de coïncidence $HIT_i$, du nombre d'extraits présents dans la mémoire rapide et de l'état antérieur $RF_i$ des bascules de référence, le circuit de commande 9 réactualise l'état de ces dernières. En fonction du nouvel état $RF_i$ de ces bascules et des indicateurs de présence $PR_i$, le circuit de sélection 10 réactualise les signaux de sélection $S_i$ permettant de déterminer les nouveaux registres dans lesquelles le prochain extrait à charger sera écrit.

En cas d'échec, cette situation est signalée par le signal AD VAL qui déclenche le microprogramme de recherche dans les tables. Une fois la recherche effectuée, l'extrait correspondant $AV_e$, $AR_e$ est présenté à l'entrée des interfaces 5, 6. Cet extrait est ensuite chargé sous la commande du circuit 11 en fonction des signaux d'écriture WRR, WRV et des signaux de sélection $S_i$. Une fois l'extrait chargé dans les registres sélectionnés, le micrologiciel effectue une nouvelle tentative de traduction de l'adresse virtuelle à traduire.

Selon une particularité de cette réalisation, le circuit de commande 9 prend en compte le nombre d'extraits présents dans la mémoire. Tant que ce nombre est inférieur à une valeur de seuil t déterminée, les indicateurs de référence $RF_i$ sont maintenus inchangés et conservent donc la valeur initiale (par exemple 0) qui leur a été imposée par le signal RS en début d'exécution du processus, par exemple suite à un dispatching. Dès que le nombre d'extraits présents atteint ou dépasse la valeur t, les indicateurs $RF_i$ peuvent être modifiés selon l'algorithme classique pseudo LRU. Nous verrons dans la suite de la description comment ce seuil peut être détecté en pratique.

La valeur de seuil sera déterminée en recherchant la valeur optimale du nombre n - t qui correspond au nombre d'extraits chargés entre le moment où le seuil est atteint et le moment où la mémoire associative est pleine. Pour cela, on peut utiliser des données statistiques portant notamment sur les nombres d'extraits utilisés par les processus, entre deux dispatchings et l'ancienneté des pages réutilisées. Une autre solution consiste à effectuer des simulations de fonctionnement du système avec des programmes caractéristiques, en faisant varier la valeur de seuil.

A titre d'exemple non limitatif, pour un ordinateur universel de type multiprocesseur, avec n = 32, on peut choisir t = 24.

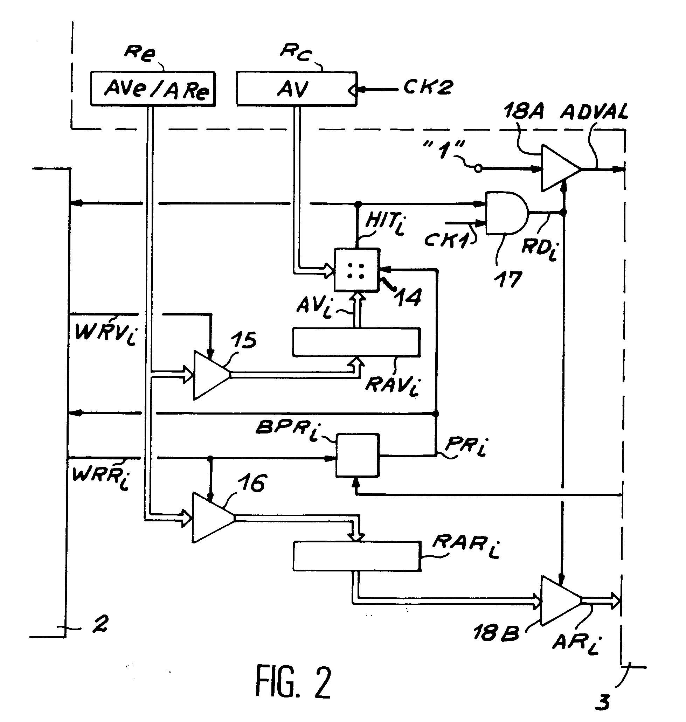

La figure 2 représente la partie de la mémoire 1 associée à l'un des extraits. Les adresses virtuelle et réelle de l'extrait i supposé chargé sont respectivement contenues dans les registres d'adresse virtuelle $RAV_i$ et réelle $RAR_i$. La sortie parallèle $AV_i$ du registre d'adresse virtuelle $RAV_i$ est reliée à une première entrée d'un circuit de comparaison 14 du comparateur 4 dont la seconde entrée reçoit l'adresse virtuelle à traduire AV fournie par le registre $R_c$. Une bascule de présence $BPR_i$ a sa sortie $PR_i$ reliée à l'entrée de validation du circuit 14. La sortie $PR_i$ est aussi reliée au contrôleur 2. La sortie du circuit 14 est reliée d'une part au contrôleur 2 et d'autre part à l'entrée d'une porte de synchronisation 17. La porte 17 est synchronisée par la première phase CK1 d'un signal d'horloge.

La sortie parallèle du registre d'adresse réelle $RAR_i$ est reliée à l'entrée d'un amplificateur 18B validé par le signal de sortie $RD_i$ de la porte de synchronisation 17. Le signal $RD_i$ valide également l'amplificateur 18A qui reçoit en entrée une tension correspondant à la valeur 1 logique. Les signaux AD VAL et $AR_i$ issus des amplificateurs 18A et 18B sont envoyés au micrologiciel.

Les adresses virtuelle et réelle $AV_e$, $AR_e$ destinées à être chargées dans les registres sont initialement placées dans un registre de sortie $R_e$ du micrologiciel. La sortie parallèle du registre $R_e$ est reliée aux entrées parallèles des registres $RAV_i$ et $RAR_i$ par l'intermédiaire respectivement des amplificateurs 15 et 16. Les amplificateurs 15, 16 sont validés respectivement par les signaux $WRV_i$ et $WRR_i$ fournis par le contrôleur 2.

Le circuit de la figure 2 fonctionne de la façon suivante. Une horloge (non représentée) fournit un signal d'horloge à 2 phases CK1 et CK2. Pendant la phase CK2, le micrologiciel place l'adresse virtuelle à traduire AV dans le registre $R_c$. Pendant la phase suivante CK1, cette adresse est comparée dans le circuit 14 à l'adresse virtuelle $AV_i$ contenue dans le registre $RAV_i$. Si les adresses AV et $AV_i$ sont différentes, ou si l'indicateur de présence $PR_i$ est à zéro, le signal de coïncidence $HIT_i$ prend la valeur zéro. Il en résulte que pendant la phase CK1, les amplificateurs 18A et 18B sont maintenus à l'état de haute impédance.

Si par contre les adresses AV et $AV_i$ sont identiques alors que l'indicateur de présence $PR_i$ est à 1, le signal de coïncidence $HIT_i$ prend la valeur 1. Ainsi, pendant la phase CK1, l'adresse réelle $AR_i$ contenue dans le registre $RAR_i$ est transmise au micrologiciel par l'intermédiaire de l'amplificateur 18B. Simultanément le signal AD VAL est à 1, indiquant ainsi le succès de la traduction. On peut noter que les amplificateurs 18A associés aux différents extraits de la mémoire effectuent une fonction OU câblée pouvant être avantageusement réalisée au moyen d'une ligne préchargée pendant la phase CK2 et sélectivement déchargée par l'un des signaux $RD_i$ pendant la phase CK1.

Pour charger un nouvel extrait dans la mémoire rapide, le micrologiciel place d'abord l'adresse virtuelle $AV_e$ de l'extrait dans le registre $R_e$ et active le signal de commande d'écriture d'adresse virtuelle WRV. Si le registre $RAV_i$ est sélectionné, le circuit de chargement 11 du contrôleur 2 fournit un signal $WRV_i$ qui valide l'amplificateur 15. De même, l'adresse réelle correspondante $AR_e$ est ensuite placée dans le registre de sortie $R_e$ et le signal $WRR_i$ valide l'amplificateur 16.

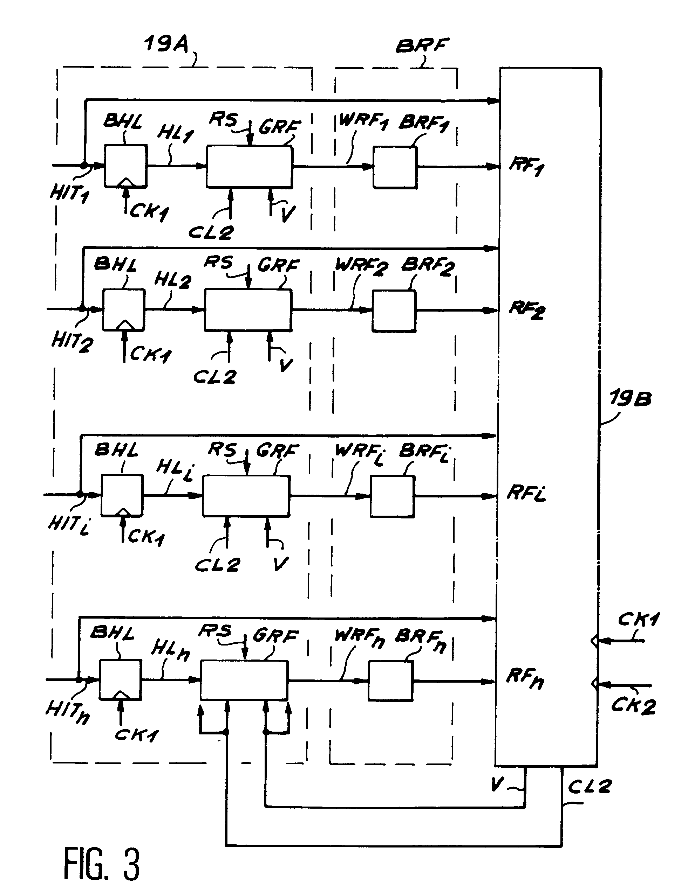

La figure 3 représente plus en détail les bascules de référence BRF et leur circuit de commande 9. Le circuit de commande 9 se décompose en un circuit de commande commun 19B et un ensemble 19A de circuits de gestions des bascules BRF. Les emplacements (couples de registres) de la mémoire associative étant référencés par les indices 1, 2, ..., i, ..., n, on leur associe respectivement les bascules $BRF_1$, $BRF_2$, ..., $BRF_i$, ..., $BRF_n$. Chaque bascule $BRF_i$ est commandée par un signal $WRF_i$ fourni par un circuit de gestion GRF associé. Les sorties $RF_1$, $RF_2$, ..., $RF_i$, ..., $RF_n$ sont reliées au circuit de commande commun 19B qui fournit à chaque circuit de gestion GRF un signal V de prépositionnement de mise à 1 et un signal CL2 de prépositionnement de remise à 0. Le circuit 19B reçoit également les signaux de coïncidence $HIT_1$, $HIT_2$, ..., $HIT_i$, ..., $HIT_n$.

Chaque circuit de gestion GRF reçoit un signal $HL_i$ obtenu par verrouillage sur la phase CK1 par une bascule BHL du signal de coïncidence $HIT_i$ associé.

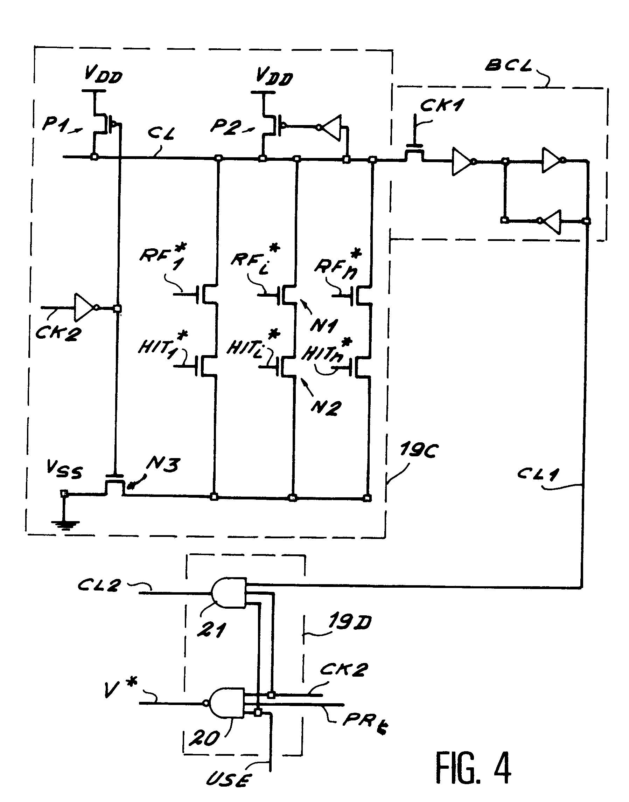

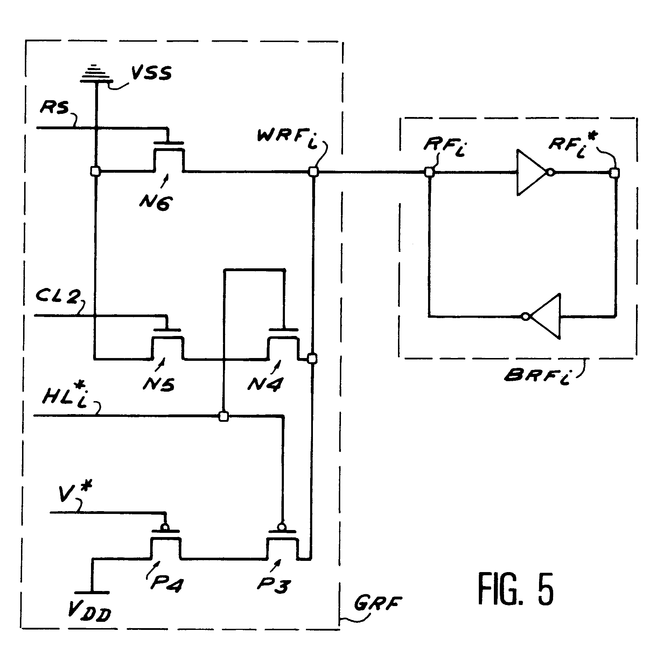

Le fonctionnement du circuit de la figure 3 sera expliqué avec les figures 4 et 5 qui représentent respectivement des réalisations détaillées du circuit de commande commun 19B et du circuit de gestion GRF. Par convention, les explications seront données en logique positive.

Le circuit de commande commun 19B de la figure 4 est composé d'un circuit d'évaluation 19C, d'une bascule BCL et d'un circuit de synchronisation 19D.

Le circuit d'évaluation 19C comporte une ligne d'évaluation CL dont l'état indique si la condition de saturation de la mémoire rapide est atteinte. Le circuit 19C consiste en une porte logique complexe en technologie CMOS dont la ligne CL est préchargée pendant la phase CK2 au moyen des transistors PMOS $P_1$ et $P_2$. La ligne CL est évaluée en fonction des signaux $HIT_i^*$ et $RF_i^*$ respectivement compléments des signaux de coïncidence $HIT_i$ et de référence $RF_i$ associés aux extraits contenus dans la mémoire rapide. L'état de la ligne CL est verrouillé par la phase CK1 dans la bascule BCL qui délivre en sortie un signal d'évaluation verrouillé CL1.

La ligne CL est reliée à la masse VSS par l'intermédiaire du transistor NMOS commun N3 et, pour chaque extrait, du montage série formé de deux transistors NMOS N1 et N2 dont les grilles reçoivent respectivement les signaux $RF_i^*$ et $HIT_i^*$ de l'extrait associé. Ce montage permet de réaliser la fonction logique (évaluée pendant la phase CK1) :

$$CL = \Sigma^* \ (RF_i^*.HIT_i^*)$$

où $\Sigma^*$ est la fonction NON-OU ("NOR") appliquée à l'ensemble des produits logiques $RF_i^*.HIT_i^*$.

Le transistor N3, bloqué pendant la phase CK2 contribue à la précharge de la ligne CL.

Ainsi, à partir du début du fonctionnement de la mémoire associative où tous les indicateurs sont initialisés à 0, la ligne CL est déchargée à chaque phase d'évaluation tant que la condition de saturation n'est pas atteinte et cette condition correspond au cas où tous les indicateurs de référence sont à 1 sauf un pour lequel il y a coïncidence. Dans ce dernier cas, la ligne CL conserve la valeur 1 logique pendant la phase d'évaluation, signalant ainsi que la condition de saturation est atteinte.

Le circuit de synchronisation 19D comprend une porte ET 21 à trois entrées. Une première entrée reçoit le signal d'évaluation verrouillé CL1, une seconde entrée reçoit la phase CK2 et la troisième entrée reçoit un signal USE d'autorisation de fonctionnement. Le signal USE est un signal de commande de fonctionnement fourni par le micrologiciel.

Le circuit 19D comprend également une porte NON-ET ("NAND") 20 à trois entrées recevant respectivement la phase d'horloge CK2, le signal USE et un signal de seuil $PR_t$ prenant la valeur 1 logique lorsque le seuil de chargement de la mémoire rapide est atteint. La porte 20 fournit en sortie le signal V* qui est le complément du signal V de prépositionnement de mise à 1. A condition que les emplacements soient chargés dans un ordre déterminé, le signal de seuil peut être obtenu simplement par la lecture de la bascule $BPR_t$ dont le rang est égal à la valeur du seuil t et qui a été choisi.

La figure 5 représente la bascule de référence $BRF_i$ et son circuit de gestion GRF associé. La bascule $BRF_i$ est simplement constitué de deux inverseurs montés en tête bêche qui fournissent l'indicateur de référence $RF_i$ et son complément $RF_i^*$.

L'état $RF_i$ de la bascule $BRF_i$ est commandé par la ligne $WRF_i$. La ligne $WRF_i$ peut être déchargée par l'intermédiaire du montage série formé de deux transistors NMOS N4, N5 ou par l'intermédiaire d'un transistor NMOS N6. Les transistors N4, N5 et N6 reçoivent respectivement sur leur grille le signal $HL_i^*$ qui est le complément du signal $HL_i$, le signal CL2 et le signal RS. Il en résulte que la ligne $WRF_i$ est déchargée lorsque le signal RS est à 1 ou lorsque le signal CL2 est à 1 alors que le signal $HL_i$ est à 0. Ainsi, la bascule $BRF_i$ est forcée à 0 lorsque la condition de saturation est détectée alors que l'adresse virtuelle contenue dans le registre associé ne coïncide pas avec l'adresse virtuelle à traduire.

La ligne $WRF_i$ peut être placée à la valeur 1 logique par l'intermédiaire du montage série formé de deux transistors PMOS P3, P4 recevant respectivement sur leur grille les signaux $HL_i^*$ et V*. Il résulte de ce montage que la bascule $BRF_i$ est forcée à 1 lorsque les signaux V et $HL_i$ sont à 1, c'est-à-dire lorsque l'adresse virtuelle recherchée coïncide avec l'adresse virtuelle contenue dans le registre à condition que le seuil soit atteint.

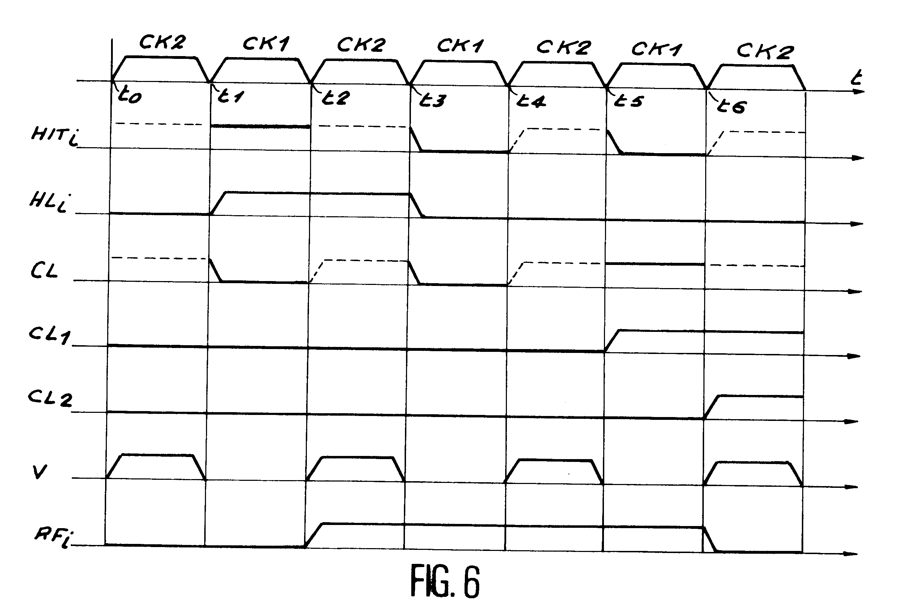

Le fonctionnement complet des circuits des figures 3, 4 et 5 va être maintenant exposé en relation avec les chronogrammes de la figure 6.

Les chronogrammes de la figures 6 représentent les variations en fonction du temps des signaux CL, CL1, CL2 et V engendrés par le circuit de commande commun 19B ainsi que des signaux $HIT_i$, $HL_i$ et $RF_i$ associés à l'extrait i de la mémoire associative. On admet que l'extrait i considéré est présent, c'est-à-dire que l'indicateur $PR_i$ est à 1. On a supposé également que le seuil est déjà atteint, c'est-à-dire que le signal V est à 1 pendant la phase CK2, donc que le signal V* est à 0 pendant cette phase. On suppose enfin qu'à l'instant initial $t_0$ l'indicateur de référence $RF_i$ et le signal d'évaluation verrouillé CL1 sont tous deux à 0.

A partir de l'instant $t_0$ pendant la phase CK2 s'effectue la précharge de la ligne CL du circuit 19C. A partir de l'instant $t_1$, pendant la phase suivante CK1 s'effectue l'évaluation du signal de coïncidence $HIT_i$ supposé prendre la valeur 1. Pendant cette phase, le signal $HIT_i$ est verrouillé par la bascule BHL dont l'état $HL_i$ passe à 1. Simultanément, la ligne CL est évaluée. En supposant que la saturation n'est pas atteinte, le signal CL passe à 0 et les signaux CL1 et CL2 restent également à 0. Pendant la phase suivante CK2 à partir de l'instant $t_2$, la ligne CL est à nouveau préchargée. D'autre part, les signaux de coïncidence $HL_i$ et de validation V étant à 1, les transistors P3 et P4 du circuit de gestion GRF sont passants, la ligne $WRF_i$ est chargé à une tension positive forçant ainsi l'indicateur $RF_i$ à 1.

Pendant la phase suivante CK1 à partir de l'instant $t_3$, en supposant qu'il n'y a pas coïncidence, le signal de coïncidence $HIT_i$ passe à 0 forçant ainsi le signal $HL_i$ à 0. En supposant toujours que la condition de saturation n'est pas atteinte, la ligne CL est déchargée pendant cette phase et les signaux CL1 et CL2 restent à 0. Il en résulte que pendant la phase suivante CK2 à partir de l'instant $t_4$, le signal CL2 à 0 maintient le transistor N5 à l'état bloqué et empêche ainsi la remise à 0 de la bascule $BRF_i$.

Pendant la phase suivante CK1 à partir de l'instant $t_5$, nous avons supposé que la condition de seuil était atteinte et que le signal $HIT_i$ était à 0. Il en résulte que la ligne CL reste chargée provoquant ainsi la mise à 1 de la bascule BCL dont l'état CL1 passe à 1. Ainsi pendant la phase suivante CK2 à partir de l'instant $t_6$, le signal de prépositionnement de remise à 0 CL2 passe à 1, rendant passant le transistor N5. Comme le signal $HL_i$ est a 0, le transistor N4 est également passant et la ligne $WRF_i$ est déchargée et l'indicateur $RF_i$ est remis à 0.

La description qui précède montre que la mémoire associative fonctionne en permanence en deux phases d'horloge même lorsque les indicateurs de références doivent être remis à 0.

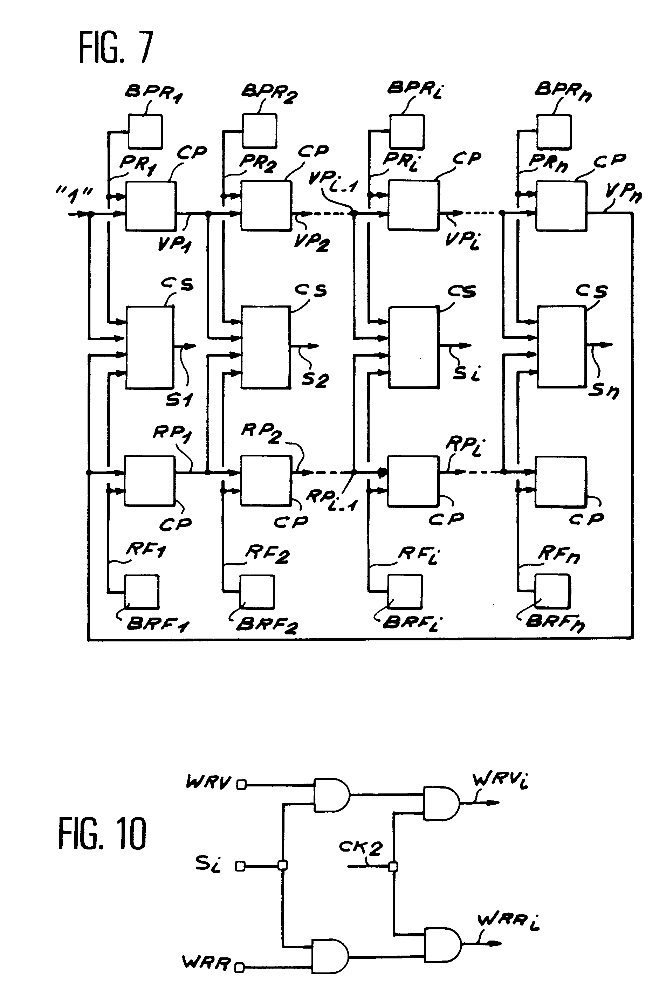

La figure 7 représente le circuit de sélection 10 mentionné en référence à la figure 1. Nous retrouvons les bascules de présence BPR1, BPR2, ..., $BPR_i$, ..., $BPR_n$ et de référence $BRF1_1$, $BRF_2$, ..., $BRF_i$, ..., $BRF_n$ associées respectivement aux extraits de rang 1, 2, ..., i, ..., n de la mémoire associative.

A chaque extrait i, est associé une cellule de sélection CS et deux circuits de propragation CP d'un signal de demande associés respectivement aux bascules de présence et de référence de l'extrait.

Chaque circuit de propagation CP fournit un signal de demande $VP_i$, respectivement $RP_i$, et reçoit l'indicateur $PR_i$, respectivement $RF_i$, de la bascule associée ainsi que le signal de demande $VP_{i-1}$, respectivement $RP_{i-1}$, issu du circuit de propagation amont.

La sortie $VP_n$ du circuit de propagation CP associé à la bascule de présence $BPR_n$ du dernier extrait de rang n est appliquée à l'entrée de demande du circuit de propagation associé à la bascule de référence $BRF_i$ du premier extrait. D'autre part, l'entrée de demande du circuit de propagation CP associé à la bascule de présence $BPR_1$ du premier extrait reçoit en permanence un signal représentatif de l'existence d'une demande. Dans l'exemple représenté, nous avons supposé qu'une demande était présente lorsque le signal de demande associé était à 1. Bien entendu, on pourrait choisir la convention inverse sans sortir pour cela du cadre de l'invention.

Chaque circuit de propagation est conçu de façon à délivrer un signal de demande $VP_i$, respectivement $RP_i$, représentatif de l'existence d'une demande lorsque le signal de demande amont $VP_{i-1}$, respectivement $RP_{i-1}$, indique l'existence d'une demande alors que l'indicateur $PR_i$, respectivement $RF_i$ est à 1. D'autre part, la cellule de sélection CS fournit un signal de sélection $S_i$ représentatif de la sélection de l'extrait i lorsque l'un des signaux de demande amont $VP_{i-1}$ ou $RP_{i-1}$ signale l'existence d'une demande alors que la bascule associée $BPR_i$ ou $BRF_i$ est à 0.

Le circuit de la figure 7 fonctionne de la façon suivante. En fonction de l'état des bascules de présence et de référence, le signal de demande appliqué en permanence à l'entrée du circuit de propagation associé à la première bascule de présence $BPR_1$ peut se propager de proche en proche, dans l'ordre croissant des extraits, par l'intermédiaire des circuits de propagation associés d'abord aux bascules de présence puis par l'intermédiaire des circuits de propagation associés aux bascules de référence. La propagation du signal de demande s'arrête au niveau du circuit de propagation qui est associé à une bascule de présence ou de référence qui est à 0. La cellule de sélection associé à cet extrait place alors le signal de sélection $S_i$ à une valeur logique déterminée signalant que l'écriture d'un nouvel extrait doit s'effectuer dans les registres associés.

Le circuit de la figure 7 permet donc de pointer en permanence sur l'emplacement de la mémoire associative destiné à recevoir un nouvel extrait à charger. L'algorithme de chargement mis en oeuvre par ce circuit consiste donc à rechercher par ordre croissant des rangs affectés aux emplacements le premier emplacement ne contenant aucun extrait (le premier dont l'indicateur de présence $PR_i$ est à 0) puis le premier extrait qui n'a pas été utilisé récemment (le premier dont l'indicateur de référence $RF_i$ est à 0). Selon cette réalisation, la mise à jour des signaux de sélection $S_i$ est asservie automatiquement au changement d'état des bascules de présence et de référence.

Compte tenu du montage en cascade des circuits de propagation, le temps de réaction de ce circuit est assez long. Cependant, cet inconvénient n'est pas déterminant car l'utilisation des signaux de sélection n'intervient qu'après la recherche dans les tables d'un nouvel extrait à charger, ce qui est aussi une opération assez longue. Toutefois, la lenteur du circuit de sélection peut devenir gênante si la mémoire associative comprend un grand nombre d'extraits. Aussi, pour remédier à cet inconvénient et selon une variante de réalisation avantageuse, il est proposé une optimisation des cellules de sélection et des circuits de propagation en vue de réduire le nombre de couches de ces circuits, donc d'augmenter la rapidité de fonctionnement.

Dans ce but, on prévoit des cellules de deux types différents selon qu'elles sont associées aux emplacements de rangs pairs ou impairs.

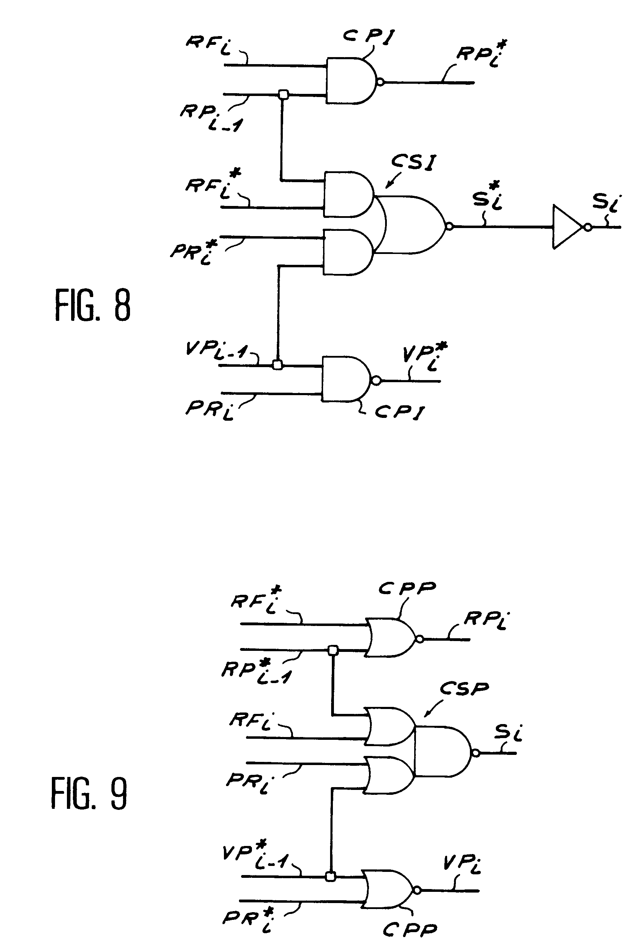

La figure 8 représente la cellule de sélection CSI et les circuits de propagation CPI associés à un emplacment de rang impair. Le circuit de propagation CPI consistent en une porte NON ET ("NAND") recevant sur une première entrée l'indicateur associé $RF_i$, $PR_i$ et sur une seconde entrée le signal de demande amont $RP_{i-1}$, $VP_{i-1}$. Les portes CPI délivrent en sortie les compléments $RP_i^*$, $VP_i^*$ des signaux de demande. La cellule CSI est une porte logique complexe qui reçoit en entrée les signaux de demandes amont $RP_{i-1}$, $VP_{i-1}$ et les compléments $RF_i^*$, $PR_i^*$ des indicateurs $RF_i$, $PR_i$. La porte CSI délivre en sortie le signal $S_i^*$, complément du signal de sélection $S_i$ vérifiant l'équation :

$$S_i = RF_i^* \cdot RP_{i-1} + PR_i^* \, VP_{i-1}$$

Pour obtenir le signal $S_i$, la sortie de la porte CSI est reliée à un inverseur.

La figure 9 représente une cellule de sélection CSP et les circuits de propagation CPP associés à un emplacement de rang pair. Une cellule de propagation CPP est réalisée au moyen d'une porte NON OU ("NOR") recevant sur une première entrée le complément d'indicateur $RF_i$, $PR_i$ associé et sur une deuxième entrée le complément $RP_{i-1}^*$, du signal de demande $RP_{i-1}$, $VP_{i-1}$ issu de l'étage impair précédent. La cellule de sélection CSP est une porte complexe recevant en entrée les indicateurs $RF_i$, $PR_i$ et les compléments des signaux de demande associés $RP_{i-1}$, $VP_{i-1}$. La porte CSP délivre le signal de sélection $S_i$ vérifiant l'équation logique précédente.

Les cellules CSI, CSP et les portes CSI, CPP peuvent être facilement réalisées en technologie CMOS.

La figure 10 représente enfin le circuit permettant d'engendrer les signaux de commande d'écriture

WRV$_i$ et WRR$_i$ associés respectivement aux registres RAV$_i$ et RAR$_i$ en fonction des signaux de commande WRV, WRR et de sélection S$_i$. Le circuit de la figure 10 est simplement réalisé au moyen des portes logiques ET permettant la transmission respectivement des signaux communs de commande d'écriture de l'adresse virtuelle WRV ou réelle WRR validés par le signal de sélection S$_i$ et synchronisé par la phase d'horloge CK2.

## Revendications

1. Dispositif pour accélérer l'accès aux informations contenues dans la mémoire principale d'un système informatique, ledit système étant capable d'accéder auxdites informations par adressage de ladite mémoire principale, l'ensemble formé par une adresse et l'information associée étant appelé "extrait", ledit dispositif comportant une mémoire rapide (1, RAR, RAV) composée d'une pluralité d'emplacements (RAR$_i$, RAV$_i$), chaque emplacement étant capable de mémoriser un desdits extraits, chaque emplacement étant associé à une bascule de présence (BPR$_i$) et à une bascule de référence (BRF$_i$) initialement mises à zéro, ladite bascule de présence (BPR$_i$) étant forcé à la valeur 1 logique lorsqu'un extrait est chargé dans l'emplacement (RAR$_i$, RAV$_i$) associé, ladite mémoire rapide (1, RAR, RAV) étant associée à des moyens de comparaison (4, 14) délivrant pour chaque emplacement un signal de coïncidence (HIT$_i$) prenant la valeur 1 logique lorsque l'adresse d'une information recherchée coïncide avec l'adresse de l'extrait présent dans ledit emplacement, ledit dispositif étant caractérisé en ce qu'il reçoit des signaux de synchronisation à deux phases (CK1, CK2), en ce que lesdits signaux de coïncidence (HIT$_i$) sont évalués pendant la première desdites phases (CK1) et respectivement appliqués à l'entrée d'un moyen de mémorisation (BHL) commandé par la première desdites phases (CK1) de façon à former un signal de coïncidence verrouillé (HL$_i$) sur cette phase (CK1), en ce que ledit dispositif comprend un circuit de commande commun (19B) pour engendrer pendant la première desdites phases (CK1) un signal d'évaluation (CL) fonction de l'état desdites bascules de référence (BRF$_i$) et desdits signaux de coïncidence (HIT$_i$), ledit signal d'évaluation étant représentatif de l'état de saturation indiquant lorsque les bascules de références (BRF$_i$) sont toutes à 1 sauf une pour laquelle il y a coïncidence, en ce que ledit circuit de commande commun (19B) comprend des moyens de mémorisation (BCL) dudit signal d'évaluation (CL) commandé par la première desdites phases (CK1) de façon à former un signal d'évaluation verrouillé (CL1) sur cette phase (CK1), en ce que ledit dispositif comprend des circuits de gestion (GRF) de chacune desdites bascules de référence (BRF$_i$) actifs pendant la seconde desdites phases (CK2) pour commander lesdites bascules de référence (BRF$_i$) en fonction dudit signal d'évaluation verrouillé (CL1) et respectivement desdits signaux de coïncidence verrouillés (HL$_i$).

2. Dispositif selon la revendication 1, caractérisé en ce que ledit signal d'évaluation (CL) est fourni par un circuit d'évaluation (19C) effectuant l'opération logique NON-OU appliquée à des variables logiques produit associées auxdits extraits, chaque variable logique produit étant définie comme le produit logique du complément (RF$_i$*) du bit de référence (RF$_i$) et du complément (HIT$_i$*) du signal de coïncidence (HIT$_i$) associés respectivement à chaque extrait.

3. Dispositif selon la revendication 2, caractérisé en ce que ledit circuit d'évaluation (19C) est un circuit en technologie CMOS, en ce qu'il comprend une ligne d'évaluation (CL) préchargée pendant la seconde desdites phases (CK2), en ce que chaque emplacement (RAV$_i$, RAR$_i$) de ladite mémoire rapide (1) est associé à deux transistors NMOS (N1, N2) montés en série, en ce que ladite ligne d'évaluation (CL) est reliée à la masse (VSS) par l'intermédiaire de chacun desdits transistors (N1, N2) montés en série et en ce que, pour chaque emplacement, le premier et le deuxième transistors recoivent sur leur grille respectivement le complément (RF$_i$*, HIT$_i$*) de l'indicateur de référence (RF$_i$) et du signal de coïncidence (HIT$_i$).

4. Dispositif selon l'une des revendications 2 ou 3, caractérisé en ce que ledit circuit de commande commun (19B) comprend un circuit de synchronisation (19D) délivrant un signal de prépositionnement de remise à zéro (CL2) actif pendant la seconde desdites phases (CK2) et prenant la même valeur logique que le signal d'évaluation verrouillé (CL1) et en ce que chaque circuit de gestion (GRF) remet à 0 la bascule de référence associée (BRF$_i$) lorsque ledit signal de prépositionnement (CL2) est à 1 alors que ledit signal de coïncidence verrouillé (HL$_i$) est à 0.

5. Dispositif selon la revendication 4, caractérisé en ce que ledit circuit de gestion (GRF) associé à chaque emplacement comprend une ligne de sortie (WRF$_i$) relié à la masse (VSS) par l'intermédiaire de deux transistors NMOS montés en série, lesdits transistors recevant sur leur grille respectivement ledit signal de prépositionnement (CL2) et le complément (HL$_i$*) du signal de coïncidence verrouillé (HL$_i$) associé audit emplacement et en ce que ladite ligne de sortie (WRF$_i$) est reliée à une tension positive (VDD) par l'intermédiaire de deux transistors PMOS montés en série (P3, P4) recevant sur leur grille respectivement le complément (V*) d'un signal de validation de mise à un (V) et le complément (HL$_i$*) dudit signal de coïncidence verrouillé (HL$_i$).

6. Dispositif selon l'une des revendications 1 à 4, caractérisé en ce que l'écriture d'un nouvel extrait dans ladite mémoire rapide (1, RAR, RAV) est effectuée pendant la seconde desdites phases (CK2).

7. Dispositif selon l'une des revendications 1 à 6, caractérisé en ce que lesdits moyens de comparaison (14) sont constitués de circuits de comparaison respectivement associés auxdits emplacements et validés par le signal d'état de la bascule de présence (PR$_i$) associée, de façon à n'émettre un signal de coïncidence (HIT$_i$) que lorsque ladite bascule (BPR$_i$) est à l'état 1 logique.

8. Dispositif selon l'une des revendications 1 à 7, caractérisé en ce que, ledit système informatique possédant un mécanisme de mémoire virtuelle paginée, ladite adresse (AV$_i$) de chaque extrait étant une adresse virtuelle de page et ladite information associée étant l'adresse réelle (AR$_i$) de ladite page, chaque emplacement de ladite mémoire rapide (1, RAR, RAV) est composé d'un registre d'adresses virtuelles (RAV$_i$) et d'un registre d'adresses réelles (RAR$_i$) et en ce que la lecture dudit registre d'adresses réelles (RAR$_i$) est validée pendant la première desdites phases (CK1) à condition que ledit signal de coïncidence (HIT$_i$) associé soit à la valeur 1 logique.

**Patentansprüche**

1. Einrichtung zum Beschleunigen des Zugriffs auf die in einem Hauptspeicher eines Informationssystems enthaltenen Informationen, wobei das System auf die Informationen durch Adressierung des Hauptspeichers zugreifen kann, wobei die durch eine Adresse und die zugehörige Information gebildete Gesamtheit "Extrakt" genannt wird, wobei die Einrichtung einen schnellen Speicher (1, RAR, RAV) enthält, der aus mehreren Speicherplätzen (RAR$_i$, RAV$_i$) aufgebaut ist, wobei jeder Speicherplatz einen der Extrakte speichern kann, wobei jeder Speicherplatz einer Präsenz-Kippschaltung (BPR$_i$) und einer Referenz-

Kippschaltung (BRF$_i$) zugeordnet ist, die anfangs auf Null gesetzt werden, wobei die Präsenz-Kippschaltung (BPR$_i$) auf den logischen Wert 1 gezwungen wird, wenn ein Extrakt in den zugehörigen Speicherplatz (RAR$_i$, RAV$_i$) geladen wird, wobei der schnelle Speicher (1, RAR, RAV) mit Vergleichsmitteln (4, 14) verbunden ist, die für jeden Speicherplatz ein Koinzidenzsignal (HIT$_i$) ausgeben, das den logischen Wert 1 annimmt, wenn die Adresse einer gesuchten Information mit der Adresse des an der Speicherstelle vorhandenen Extrakts übereinstimmt, wobei die Einrichtung dadurch gekennzeichnet ist, daß sie zweiphasige Synchronisationssignale mit zwei Phasen (CK1, CK2) empfängt, daß die Koinzidenzsignale (HIT$_i$) während der ersten der Phasen (CK1) ausgewertet und jeweils in den Eingang eines Speichermittels (BHL) eingegeben werden, das von der ersten der Phasen (CK1) so gesteuert wird, daß ein mit dieser Phase (CK1) verriegeltes Koinzidenzsignal (HL$_i$) gebildet wird, daß die Einrichtung eine gemeinsame Steuerschaltung (19B) enthält, um während der ersten dieser Phasen (CK1) ein Auswertungssignal (CL) zu erzeugen, das vom Zustand der Referenz-Kippschaltungen (BRF$_i$) und der Koinzidenzsignale (HIT$_i$) abhängt, wobei das Auswertungssignal den Sättigungszustand darstellt, der angibt, wenn die Referenz-Kippschaltungen (BRF$_i$) bis auf eine, für die Koinzidenz vorhanden ist, sämtlich auf 1 liegen, daß die gemeinsame Steuerschaltung (19B) Speichermittel (BCL) für das Auswertungssignal (CL) enthält, die von der ersten dieser Phasen (CK1) so gesteuert werden, daß ein mit dieser Phase (CK1) verriegeltes Auswertungssignal (CL1) gebildet wird, daß die Einrichtung Schaltungen für die Steuerung (GRF) einer jeden der Referenz-Kippschaltungen (BRF$_i$) enthält, die während der zweiten dieser Phasen (CK2) aktiv sind, um die Referenz-Kippschaltungen (BRF$_i$) in Abhängigkeit vom verriegelten Auswertungssignal und von den jeweiligen verriegelten Koinzidenzsignalen (HL$_i$) zu steuern.

2. Einrichtung gemäß Anspruch 1, dadurch gekennzeichnet, daß das Auswertungssignal (CL) von einer Auswertungsschaltung (19C) geliefert wird, die die logische NICHT-ODER-Operation an den Extrakten zugehörigen logischen Produktvariablen ausführt, wobei jede logische Produktvariable als logisches Produkt des Komplements (RF$_i$*) des Referenzbits (RF$_i$) und des Komplements (HIT$_i$*) des Koinzidenzsignals (HIT$_i$), die den jeweiligen Extrakten zugehören, definiert ist.

3. Einrichtung gemäß Anspruch 2, dadurch gekennzeichnet, daß die Auswertungsschaltung (19C) eine Schaltung in CMOS-Technologie ist, daß sie eine Auswertungsleitung (CL) besitzt, die während der zweiten der Phasen (CK2) vorgespannt ist, daß jeder Speicherplatz (RAV$_i$, RAR$_i$) des schnellen Speichers (1) mit zwei in Reihe geschalteten NMOS-Transistoren (N1, N2) verbunden ist, daß die Auswertungsleitung (CL) über einen der in Reihe geschalteten Transistoren (N1, N2) mit Masse (VSS) verbunden ist und daß für jeden Speicherplatz der erste und der zweite Transistor an ihrem Gate das Komplement (RF$_i$*, HIT$_i$*) des Referenzindikators (RF$_i$) bzw. des Koinzidenzsignals (HIT$_i$) empfangen.

4. Einrichtung gemäß einem der Ansprüche 2 oder 3, dadurch gekennzeichnet, daß die gemeinsame Steuerschaltung (19B) eine Synchronisationsschaltung (19D) enthält, die ein Vorpositionierungssignal zum Rücksetzen auf Null (CL2) ausgibt, das während der zweiten der Phasen (CK2) aktiv ist und denselben logischen Wert wie das verriegelte Auswertungssignal (CL1) annimmt, und daß jede Steuerschaltung (GRF) die zugehörige Referenz-Kippschaltung (BRF$_i$) auf 0 zurücksetzt, wenn das Vorpositionierungssignal (CL2) auf 1 liegt, während das verriegelte Koinzidenzsignal (HL$_i$) auf 0 liegt.

5. Einrichtung gemäß Anspruch 4, dadurch gekennzeichnet, daß die jedem Speicherplatz zugehörige Steuerschaltung (GRF) eine Ausgangsleitung (WRF$_i$) umfaßt, die über zwei in Reihe geschaltete NMOS-Transistoren mit Masse (VSS) verbunden ist, wobei die Transistoren an ihrem Gate das Positionierungssignal (CL2) bzw. das Komplement (HL$_i$*) des dem Speicherplatz zugehörigen verriegelten Koinzidenzsignals (HL$_i$) empfangen, und daß die Ausgangsleitung (WRF$_i$) über zwei in Reihe geschaltete PMOS-Transistoren (P3, P4), die an ihrem Gate das Komplement (V*) eines Validierungssignals zum Setzen auf 1 (V) bzw. das Komplement (HL$_i$*) des verriegelten Koinzidenzsignals (HL$_i$) empfangen, mit einer positiven Spannung (VDD) verbunden ist.

6. Einrichtung gemäß einem der Ansprüche 1 bis 4, dadurch gekennzeichnet, daß das Schreiben eines neuen Extrakts in den schnellen Speicher (1, RAR, RAV) während der zweiten der Phasen (CK2) ausgeführt wird.

7. Einrichtung gemäß einem der Ansprüche 1 bis 6, dadurch gekennzeichnet, daß die Vergleichsmittel (14) aus Vergleichsschaltungen gebildet sind, die den jeweiligen Speicherplätzen zugeordnet sind und durch das Zustandssignal der zugehörigen Präsenz-Kippschaltung (PR$_i$) validiert werden, so daß nur dann ein Koinzidenzsignal (HIT$_i$) ausgesandt wird, wenn die Kippschaltung (BPR$_i$) den logischen Zustand 1 hat.

8. Einrichtung gemäß einem der Ansprüche 1 bis 7, dadurch gekennzeichnet, daß dann, wenn das Informationssystem einen Mechanismus eines seitenweisen virtuellen Speichers besitzt, die Adresse (AV$_i$) eines jeden Extrakts eine virtuelle Seitenadresse ist und die zugehörige Information eine reelle Adresse (AR$_i$) der Seite ist, jeder Speicherplatz des schnellen Speichers (1, RAR, RAV) aus einem Register für virtuelle Adressen (RAV$_i$) und aus einem Register für reelle Adressen (RAR$_i$) aufgebaut ist und daß das Lesen des Registers für reelle Adressen (RAR$_i$) während der ersten der Phasen (CK1) validiert wird, vorausgesetzt, daß das zugehörige Koinzidenzsignal (HIT$_i$) den logischen Wert 1 hat.

## Claims

1. A device for accelerating access to information contained in the main memory of a computer system, said system being capable of gaining access to said information by addressing said main memory, the group formed by an address and the associated item of information being called an "extract", said device comprising a high-speed memory (1, RAR, RAV) composed of a plurality of locations (RAR$_i$, RAV$_i$), each location being capable of storing one of said extracts, each location being associated with a presence flip-flop (BPR$_i$) and a reference flip-flop (BRF$_i$) both initially set to zero, said presence flip-flop (BPR$_i$) being forced to the logic value 1 when an extract is loaded into the associated location (RAR$_i$, RAV$_i$), said high-speed memory (1, RAR, RAV) being associated with comparison means (4, 14) furnishing, for each location, a coincidence signal (HIT$_i$) taking the logic value 1 when the address of an item of information sought coincides with the address of the extract present in said location, said device being characterised in that it receives two-phase synchronising signals (CK1, CK2), in that said coincidence signals (HIT$_i$) are evaluated during the first of said phases (CK1) and respectively applied to the input of a storage means (BHL) controlled by the first of said phases (CK1) so as to form a latched coincidence signal (HL$_i$) on this phase (CK1), in that said device comprises a common control circuit (19B) in order to generate, during the first of said phases (CK1), an evaluation signal (CL) as a function of the state of said reference flip-flops (BRF$_i$) and said coincidence signals (HIT$_i$), said evaluation signal being representative of the state of saturation indicating when the reference flip-flops

(BRF$_i$) are all at 1 except for one for which there is coincidence, in that said common control circuit (19B) comprises means (BCL) for storing said evaluation signal (CL) controlled by the first of said phases (CK1) so as to form a latched evaluation signal (CL1) on this phase (CK1), in that said device comprises circuits (GRF) for managing each of said reference flip-flops (BRF$_i$) that are active during the second of said phases (CK2) to control said reference flip-flops (BRF$_i$) as a function of said latched evaluation signal (CL1) and, respectively, said latched coincidence signals (HL$_i$).

2. A device according to Claim 1, characterised in that said evaluation signal (CL) is supplied by an evaluation circuit (19C) performing the NOR logic operation applied to product logical variables associated with said extracts, each product logical variable being defined as the logical product of the complement (RF$_i$*) of the reference bit (RF$_i$) and the complement (HIT$_i$*) of the coincidence signal (HIT$_i$) associated respectively with each extract.

3. A device according to Claim 2, characterised in that said evaluation circuit (19C) is a circuit in CMOS technology, in that it comprises an evaluation line (CL) pre-loaded during the second of said phases (CK2), in that each location (RAV$_i$, RAR$_i$) of said high-speed memory (1) is associated with two series-mounted NMOS transistors (N1, N2), in that said evaluation line (CL) is connected to earth (VSS) via each of said series-mounted transistors (N1, N2) and in that, for each location, the first and the second transistors receive at their gates respectively the complement (RF$_i$*, HIT$_i$*) of the reference indicator (RF$_i$) and of the coincidence signal (HIT$_i$).

4. A device according to one of Claims 2 or 3, characterised in that said common control circuit (19B) comprises a synchronising circuit (19D) furnishing a presetting signal for resetting to zero (CL2), active during the second of said phases (CK2) and taking the same logic value as the latched evaluation signal (CL1) and in that each management circuit (GRF) resets to 0 the associated reference flip-flop (BRF$_i$) when said presetting signal (CL2) is at 1 while said latched coincidence signal (HL$_i$) is at 0.

5. A device according to Claim 4, characterised in that said management circuit (GRF) associated with each location comprises an output line (WRF$_i$) connected to earth (VSS) via two series-mounted NMOS transistors, said transistors receiving at their gates respectively said presetting signal (CL2) and the complement (HL$_i$*) of the latched coincidence signal (HL$_i$) associated with said location and in that said output line (WRF$_i$) is connected to a positive voltage (VDD) via two series-mounted PMOS transistors (P3, P4) receiving at their gates respectively the complement (V*) of a validation signal for setting to one (V) and the complement (HL$_i$*) of said latched coincidence signal (HL$_i$).

6. A device according to one of Claims 1 to 4, characterised in that the writing of a new extract to said high-speed memory (1, RAR, RAV) is carried out during the second of said phases (CK2).

7. A device according to one of Claims 1 to 6, characterised in that said comparison means (14) consists of comparison circuits respectively associated with said locations and validated by the state signal of the associated presence flip-flop (PR$_i$), so as to transmit a coincidence signal (HIT$_i$) only when said flip-flop (BPR$_i$) is in the logic state 1.

8. A device according to one of Claims 1 to 7, characterised in that, said computer system having a paginated virtual memory mechanism, said address (AV$_i$) of each extract being a virtual page address and said associated item of information being the real address (AR$_i$) of said page, each location of said high-speed memory (1, RAR, RAV) is composed of a register of virtual addresses (RAV$_i$) and a register of real addresses (RAR$_i$) and in that the reading of said register of real addresses (RAR$_i$) is validated during the first of said phases (CK1) on condition that said associated coincidence signal (HIT$_i$) is at the logic value 1.

FIG. 1

EP 0 394 115 B1

FIG. 2

FIG. 3

FIG. 4

FIG. 5

FIG. 6

EP 0 394 115 B1

FIG. 7

FIG. 10

FIG. 8

FIG. 9